Europäisches Patentamt

European Patent Office

Office européen des brevets

(19)

(11) **EP 0 927 144 B1**

(12) **FASCICULE DE BREVET EUROPEEN**

(45) Date de publication et mention
de la délivrance du brevet:
**17.12.2003 Bulletin 2003/51**

(21) Numéro de dépôt: **97947078.8**

(22) Date de dépôt: **18.11.1997**

(51) Int Cl.⁷: $C03C\ 17/42$

(86) Numéro de dépôt international:
**PCT/FR97/02068**

(87) Numéro de publication internationale:
**WO 98/023549 (04.06.1998 Gazette 1998/22)**

(54) **SUBSTRAT A PROPRIETES HYDROPHILES OU HYDROPHOBES AMELIOREES, COMPORTANT DES IRREGULARITES**

**SUBSTRAT MIT VERBESSERTEN HYDROPHILEN ODER HYDROPHOBEN EINGENSCHAFTEN MIT UNREGELMÄSSIGKEITEN**

**SUBSTRATE WITH IMPROVED HYDROPHILIC OR HYDROPHOBIC PROPERTIES, COMPRISING IRREGULARITIES**

(84) Etats contractants désignés:
**AT BE CH DE DK ES FR GB IT LI LU NL SE**

(30) Priorité: **26.11.1996 FR 9614405**

(43) Date de publication de la demande:
**07.07.1999 Bulletin 1999/27**

(73) Titulaire: **SAINT-GOBAIN GLASS FRANCE**
**92400 Courbevoie (FR)**

(72) Inventeurs:
• **AZZOPARDI, Marie-José**
**F-75009 Paris (FR)**
• **DELATTRE, Laurent**
**F-75013 Paris (FR)**
• **TALPAERT, Xavier**
**F-75019 Paris (FR)**

(74) Mandataire: **Muller, René et al**
**SAINT-GOBAIN RECHERCHE**
**39, quai Lucien Lefranc**
**93303 Aubervilliers (FR)**

(56) Documents cités:
**EP-A- 0 545 258      EP-A- 0 629 673**
**EP-A- 0 651 379      EP-A- 0 675 086**
**US-A- 4 474 843      US-A- 4 944 986**

Remarques:
Le dossier contient des informations techniques présentées postérieurement au dépôt de la demande et ne figurant pas dans le présent fascicule.

**Description**

L'invention est relative aux substrats, notamment transparents, auxquels on souhaite de préférence conférer les propriétés d'hydrophobie/oléophobie ou d'hydrophilie/oléophilie, en vue d'obtenir certains effets anti-pluie/anti-salissures, respectivement anti-buée. A cette fin, ces substrats sont, par exemple, munis de revêtements dans le cadre de la fabrication de vitrages d'applications diverses, comme les vitrages pour véhicules de transport ou pour le bâtiment.

Il est connu d'incorporer à la surface de substrats de diverses natures les fonctions d'hydrophobie/oléophobie ou d'hydrophilie/oléophilie. Ces fonctions ont toutes deux trait à la mouillabilité des substrats.

La propriété d'hydrophobie/oléophobie d'un substrat consiste en ce que les angles de contact entre un liquide et ce substrat sont élevés, par exemple de l'ordre de 120° pour l'eau. Le liquide a alors tendance à s'écouler aisément, sous forme de gouttes, sur le substrat, par simple gravité si le substrat est incliné, ou sous l'effet de forces aérodynamiques dans le cas d'un véhicule en mouvement. Des agents connus pour conférer cette propriété d'hydrophobie/oléophobie sont, par exemple, des alkylsilanes fluorés tels que décrits dans la demande de brevet EP-A1-O 675 087. Ils sont appliqués de manière connue en solution selon des modes de dépôt classiques avec ou sans chauffage.

Au contraire, la propriété d'hydrophilie/oléophilie d'un substrat se manifeste par de faibles angles de contact entre un liquide et ce substrat, de l'ordre de 5° pour l'eau sur du verre propre. Cette propriété favorise la formation de films liquides fins transparents, au détriment de celle de buée, constituée de minuscules gouttelettes nuisant à la visibilité à travers un substrat transparent. De nombreux agents hydrophiles, notamment hydroxylés, tels que des poly ((méth)acrytates d'hydroxyalkyle) sont utilisés à cette fin, de manière connue, pour des substrats transparents. Certains composés, dits photocatalytiques, tels que $TiO_2$, sont d'autre part utilisés, notamment en association avec des substrats verriers, non seulement pour leur caractère hydrophile après exposition à la lumière, mais aussi pour leur aptitude à dégrader, par un processus d'oxydation radicalaire, les salissures d'origine organique. Il est connu de déposer des revêtements à propriété photocatalytique comprenant $TiO_2$ à partir d'au moins un précurseur de titane, le cas échéant en solution, par pyrolyse en phase liquide, par une technique sol-gel ou encore par pyrolyse en phase vapeur.

Conformément à ce qui précède, la propriété d'hydrophobie/oléophobie s'apprécie quantitativement par la mesure de l'angle de contact formé, le plus souvent, par une goutte d'eau, sur un substrat donné. A défaut d'indication supplémentaire, cet angle de contact est mesuré pour un substrat horizontal. En réalité, comme déjà mentionné ci-dessus, c'est le comportement de gouttes de liquide en dynamique qui est visé par le fait de conférer une hydrophobie à un substrat. Ceci vaut aussi bien pour les substrats statiques sensiblement verticaux tels que les vitrages extérieurs pour le bâtiment, les vitrages de douches, que pour les vitrages de véhicules de transport. Or, dans le cas d'une goutte de liquide sur un substrat incliné par rapport à l'horizontale, on observe deux angles de contact différents : l'angle d'avancée et l'angle de reculée, déterminés à l'avant, respectivement à l'arrière de la goutte, par rapport au sens de son déplacement. Ces angles sont des valeurs atteintes à la limite du décrochement de la goutte. On appelle hystérèse la différence entre l'angle d'avancée et l'angle de reculée. Une goutte d'eau présentant une hystérèse élevée ou un angle de reculée faible aura du mal à s'écouler sur un substrat. Ainsi, on comprend aisément qu'une hydrophobie efficace est conditionnée à la fois par un angle d'avancée élevé et une hystérèse faible.

Les inventeurs ont précisément obtenu, sur ce plan, des résultats excellents encore jamais atteints à l'heure actuelle. Sur un substrat conforme à l'invention et préalablement soumis à un traitement hydrophobe, il a été obtenu un écoulement exceptionnellement aisé et rapide de gouttes de liquide, plus précisément d'eau. Qui plus est, il a pu être vérifié que les mesures prévues conformément à l'invention permettent, pour le moins, de préserver, voire augmenter les effets d'un traitement hydrophile appliqué à un substrat.

Selon l'invention, cet objectif essentiel, consistant à exacerber les propriétés d'hydrophobie/oléophobie ou hydrophilie/oléophilie d'un substrat, est réalisé par un substrat sur lequel ont été formées des irrégularités de dimensions submicroniques appartenant, dans leur quasi-totalité, à au moins deux classes différentes dont les valeurs représentatives respectives varient d'un facteur au moins égal à 5 ou au plus égal à 1 /5.

Une variante particulièrement avantageuse se caractérise par l'existence de deux classes de dimensions différentes, telles qu'elles viennent d'être définies, dont les valeurs représentatives varient respectivement d'un facteur au moins égal à 100 ou au plus égal à 1 /100.

Pour préserver les qualités optiques, notamment d'un substrat transparent, les dimensions des irrégularités n'excèdent de préférence pas 150 nm, afin d'éviter ou limiter l'apparition d'une transmission diffuse de la lumière.

Les irrégularités constituent un relief en bosses et creux sur le substrat et répondent en général plus ou moins à des formes géométriques régulières ayant, par rapport au substrat, une orientation quelconque. Les termes « bosses et creux », servant à définir l'objet de l'invention, doivent être compris au sens large comme signifiant simplement présence, respectivement absence de matière. Les dimensions des irrégularités, au sens de l'invention, correspondent ainsi sensiblement à des diamètres de sphères ou de cylindres, des hauteurs de cylindres ou des arêtes de polyèdres, orientés, par rapport au plan du substrat, perpendiculairement à celui-ci, parallèlement ou selon une direction quelconque. Ces dimensions peuvent aussi correspondre à celles d'un creux, notamment à l'espace entre deux protubérances, ou à la profondeur d'un tel creux.

Selon un premier mode de réalisation, les irrégularités sont constituées, en totalité ou en partie, par des objets inclus en surface du substrat et présentant, pour chacun d'eux, au moins deux dimensions appartenant à des classes différentes, telles que définies ci-dessus. Ces objets peuvent être différents ou identiques, mais consistent avantageusement en bâtonnets identiques d'orientation unique, notamment perpendiculaire au plan du substrat, ou d'orientation multiple.

Selon un deuxième mode de réalisation, le relief en bosses et creux du substrat est formé, en totalité ou en partie, par des objets de dimensions relativement petites, greffés sur des objets appartenant à une classe de dimensions supérieures, au sens de l'invention. Il convient, bien entendu, de disséminer suffisamment les objets de dimensions supérieures sur le substrat, de telle sorte qu'ils ne forment pas un amas compact dans lequel il n'est plus possible de discerner leur dimension propre. Du reste, ceci vaut également pour les objets de petites dimensions.

Dans un troisième mode de réalisation, ne se différenciant que légèrement du précédent, les irrégularités superficielles du substrat consistent en agglomérats d'objets relativement petits en objets appartenant, évidemment, à une classe de dimensions supérieures. Comme pour le cas précédent, il importe que l'agencement de tous les objets laisse apparaître à la fois les deux ordres de dimensions d'irrégularités. En particulier, il est nécessaire que les petits objets en couches externes des agglomérats soient suffisamment espacés les uns par rapport aux autres.

Dans l'esprit de l'invention, le substrat, muni de son revêtement, est avantageusement transparent ; il peut être à base de verre ou de matière plastique telle que poly (méthacrylate de méthyle) (PMMA), polyvinylbutyral (PVB), polycarbonate (PC) ou polyuréthane (PU).

Selon une caractéristique avantageuse, les irrégularités sont créées à la surface du substrat par formation d'un revêtement de texturation, dans lequel elles sont dues à des particules d'un agent photocatalytique tel que le dioxyde de titane $TiO_2$. En l'absence de tout traitement hydrophobe/oléophobe, un tel revêtement présente, dès qu'il est exposé à un rayonnement adéquat comme la lumière visible et/ou les ultraviolets, deux propriétés intéressantes : par la présence d'oxyde de titane photocatalytique, comme déjà vu, il favorise la disparition progressive, au fur et à mesure de leur accumulation, de salissures d'origine organique, en provoquant leur dégradation par un processus d'oxydation radicalaire.

D'autre part, il présente également une surface à caractère hydrophile/oléophile prononcé, notamment lorsqu'il comporte un liant minéral, ce qui amène un deuxième avantage non négligeable : un caractère hydrophile permet un mouillage parfait de l'eau qui peut se déposer sur le revêtement. Au lieu d'un dépôt de gouttelettes d'eau sous forme de buée gênant la visibilité, on a en fait un mince film continu d'eau qui se forme à la surface du revêtement et qui est tout à fait transparent. Cet effet « anti-buée » est notamment démontré par la mesure d'un angle de contact à l'eau inférieur à 5° après exposition à la lumière.

Conjointement à un caractère hydrophile, il peut aussi présenter un caractère oléophile, permettant le « mouillage » des salissures organiques qui, comme pour l'eau, tendent alors à se déposer sur le revêtement sous forme d'un film continu moins visible que des « taches » bien localisées. On obtient ainsi un effet « anti-salissures organiques » qui s'opère en deux temps : dès qu'elle se dépose sur le revêtement, la salissure est déjà peu visible. Ensuite, progressivement, elle disparaît par dégradation radicalaire amorcée par photocatalyse.

Par conséquent, l'application d'un substrat conforme à l'invention à un vitrage anti-salissures et anti-buée est également un objet de l'invention.

Bien entendu, les irrégularités en relief créées à la surface du substrat peuvent être dues à des particules quelconques, non photocatalytiques, telles que d'oxydes métalliques ou, par exemple, de $SiO_2$, à condition qu'elles présentent au moins deux classes de dimensions différentes telles que définies précédemment.

Selon une autre caractéristique avantageuse, on rend le substrat hydrophobe, soit en incorporant des molécules conférant cette propriété lors de la formation du revêtement comportant les irrégularités, soit en déposant à froid sur le substrat éventuellement muni d'un tel revêtement un film monomoléculaire comportant de telles molécules, qui ne modifie pratiquement pas la géométrie de surface sous-jacente.

De préférence, l'agent hydrophobe répond à la formule :

$$CF_3\text{-}(CF_2)_n\text{-}(CH_2)_m\text{-}SiX_3 \qquad (I)$$

avec :

- n = 0 à 12, de préférence 5 à 9,
- m = 2 à 5, de préférence 2,
- X = est un groupement hydrolysable tel qu'un atome d'hydrogène, de chlore, un groupement alcoxy ou, de préférence, méthoxy, éthoxy ou propoxy.

Bien que des mélanges de composés dans lesquels n est compris entre 5 et 9 soient convenables pour la réalisation de l'invention, on utilise de préférence un composé pur pour lequel, par exemple, n = 7.

En conséquence, l'application du substrat ainsi obtenu à un vitrage anti-pluie est également compris dans l'étendue de l'invention.

Diverses techniques de création d'irrégularités aux dimensions requises à la surface du substrat sont envisageables.

Il est possible de procéder à une attaque par voie mécanique ou chimique telle que par un acide ou une base.

Les irrégularités peuvent également être introduites par application sur le substrat d'un revêtement les incorporant sous forme d'objets pré-créés, notamment selon un procédé dans lequel on dépose des colloïdes dans une matrice sol-gel. Le mode de dépôt utilisé est du type trempé, « cell-coating », « spin-coating », enduction laminaire, pulvérisation de liquide ou « flow-coating ».

Dans un autre mode de réalisation, les irrégularités sont créées aux dimensions requises pendant la formation du revêtement sur le substrat. Cette création peut résulter d'une association, telle qu'une agglomération, d'objets plus petits introduits au départ et/ou d'une technique de formation du revêtement appropriée, telle que CVD (Chemical Vapor Deposition) ou pyrolyse.

L'invention sera mieux comprise à la lumière des exemples qui suivent, insérés à titre d'illustration.

EXEMPLE 1

On dépose sur une sous-couche d'oxycarbure de silicium SiOC, qui a été appliquée sur une feuille de verre float, des colloïdes de dioxyde de titane $TiO_2$ dans une matrice sol-gel.

La sous-couche de SiOC peut être obtenue par CVD à partir d'un mélange de $SiH_4$ et d'éthylène en dilution dans de l'azote, comme décrit dans la demande de brevet EP-A-0 518 755. Cette sous-couche est particulièrement efficace pour empêcher la tendance à la diffusion d'alcalins ($Na^+$, $K^+$) et d'alcalino-terreux ($Ca^{++}$) provenant du substrat de verre float vers le revêtement incorporant les colloïdes de $TiO_2$. Ces éléments peuvent en effet diminuer l'adhésion du revêtement.

Les colloïdes sont déposés à l'aide d'une dispersion comprenant :

- une formulation à base de tétraéthoxyde de silicium $Si(OEt)_4$ dilué dans l'éthanol à raison de 0,1 mole par litre d'éthanol, et
- une dispersion à 20 % en poids de particules de $TiO_2$ dans l'éthylène glycol.

La formulation et la dispersion organique sont en proportions relatives telles que la teneur en particules de dioxyde de titane dans la dispersion et ajustée de façon à obtenir une teneur de 80 % en poids de dioxyde de titane dans le revêtement une fois déposé (masse de $TiO_2$ provenant des particules/ masse de $TiO_2$ des particules + masse de $SiO_2$ obtenu par décomposition de $Si(OEt)_4$ en supposant que la décomposition est totale).

Les colloïdes de $TiO_2$ sont de forme lenticulaire ; leur taille est d'environ 45 nm et ils sont constitués d'amalgames de nanocristallites de taille 7 nm, ces deux dimensions demeurant parfaitement discernables après formation du revêtement, notamment sur un cliché de microscope électronique à balayage.

Pour le dépôt du revêtement comprenant finalement les colloïdes de $TiO_2$ dans un liant minéral constitué par $SiO_2$, on utilise la technique du trempé. Le durcissement du revêtement sur le substrat est assuré par un traitement thermique comprenant un chauffage à 100°C pendant 4 heures, puis à 550°C pendant 4 heures.

On greffe alors sur la surface ainsi obtenue un film monomoléculaire hydrophobe consistant en l'heptadécafluorodécyltrichlorosilane de formule : $CF_3$-$(CF_2)_7$-$(CH_2)_2$-$Si(Cl)_3$, par trempé dans une solution de ce composé à 0,3 % en poids dans du décane. Le greffage est alors effectué sous air sec. On obtient un film de silane fluoré greffé, d'une épaisseur uniforme de l'ordre de quelques Angströms ne modifiant pas sensiblement la géométrie du revêtement de texturation sous-jacent. Les dimensions d'irrégularités de 7 et 45 nm restent mesurables, également dans le produit final.

Les angles d'avancée et de reculée sont mesurés par croissance, respectivement décroissance d'une goutte d'eau, effectuées au moyen d'une pipette. Dans le premier cas, l'angle de contact croît au fur et à mesure de la croissance de la goutte, puis décroît, au moment où l'on observe un décrochement, c'est-à-dire un déplacement brusque du point triple. L'angle de contact mesuré à cet instant précis est l'angle d'avancée. Dans le second cas, c'est l'inverse qui se produit.

Les angles d'avancée et de reculée obtenus en l'espèce sont de 170°, respectivement 120°.

Ces valeurs sont à comparer avec celles obtenues pour un film monomoléculaire hydrophobe greffé dans les conditions décrites précédemment sur du verre float standard (sans irrégularités de surface) : angle d'avancée de l'ordre de 110-120° et angle de reculée de l'ordre de 80-90°.

EXEMPLE 2

L'exemple 1 a été reproduit en remplaçant les colloïdes lenticulaires de $TiO_2$ par des nanocristallites de $TiO_2$ présentant, comme unique dimension, un diamètre de 5 nm.

En réalité, la mise en oeuvre des conditions opératoires décrites dans l'exemple 1 aboutit à une association multicouche des nanocristallites, dans laquelle on distingue, outre la dimension initiale de 5 nm, des amas d'une dimension maximale approximative de 20 nm. Ces deux dimensions se différencient d'un facteur 4 ; les irrégularités correspondantes, bien que rapprochant le produit obtenu de l'invention, l'en excluent donc cependant.

Les angles d'avancée et de reculée observés sont respectivement de 145 et 110°, ce qui correspond, par rapport à l'exemple 1, à la fois à une diminution de l'angle d'avancée et de l'angle de reculée.

La comparaison avec l'exemple 1 montre, pour ce dernier, une propriété hydrophobe supérieure à un degré inattendu, pour un rapport des deux dimensions de $\frac{45}{7}$ = 6,43 au lieu de $\frac{20}{5}$ = 4 pour l'exemple 2.

### EXEMPLE 3

On reproduit l'exemple 1 en remplaçant les colloïdes lenticulaires de $TiO_2$ par des colloïdes de $SiO_2$ sphériques de 50 nm de diamètre qui, dans les conditions opératoires précitées, forment une monocouche, de sorte que seule leur dimension initiale peut être observée dans le produit final, recouvert du film monomoléculaire hydrophobe.

Les angles d'avancée et de reculée sont respectivement de 146 et 93°.

En comparaison avec l'exemple 1, l'angle de reculée est particulièrement faible, du même ordre que celui mentionné ci-dessus pour du verre float standard revêtu d'un film monomoléculaire hydrophobe greffé.

Cet exemple indique le caractère essentiel des irrégularités de surface appartenant à au moins deux classes de dimensions différentes.

Par conséquent, l'invention répond au mieux à la préoccupation d'obtenir, en premier lieu, un angle d'avancée élevé et, en second lieu, une hystérèse faible ou un angle de reculée élevé. Elle met donc à disposition un substrat dont le caractère hydrophobe est nettement plus élevé que ce que l'on connaissait jusqu'à présent.

Qui plus est, en l'absence d'un traitement hydrophobe du substrat selon l'invention, un tel substrat ayant un revêtement de texturation à base de particules de dioxyde de titane présente d'excellentes propriétés anti-salissures et anti-buée. En particulier, la buée ne se forme pas sur ce substrat ou n'est pas perceptible. Ceci traduit un degré d'hydrophilie/oléophilie élevé. Ainsi rend on possible l'obtention d'un substrat possédant au choix l'une de ces propriétés contraires, par une simple adaptation.

## Revendications

**1.** Substrat dont au moins une partie d'au moins une des faces présente une géométrie, éventuellement obtenue au moyen d'un revêtement, et qui diffère de celle d'une nappe régulière idéale, parfaitement plane ou même légèrement bombée, en ce qu'elle présente un relief en bosses et creux pouvant être définis par des dimensions submicroniques qui, dans leur quasi-totalité, appartiennent à au moins deux classes différentes dont les valeurs représentatives respectives varient d'un facteur au moins égal à 5 ou au plus égal à 1/5, **caractérisé en ce que**, après qu'il a été éventuellement muni d'un revêtement, il est recouvert d'une couche comportant un agent hydrophobe, cette couche consistant notamment en un film monomoléculaire ne modifiant pas sensiblement la géométrie de surface du substrat éventuellement muni de son revêtement.

**2.** Substrat selon la revendication 1, **caractérisé par** l'existence de deux classes de dimensions différentes dont les valeurs représentatives respectives varient d'un facteur au moins égal à 100 ou au plus égal à 1 /100.

**3.** Substrat selon la revendication 1 ou 2, **caractérisé en ce que** l'on choisit, pour lesdites dimensions submicroniques, des valeurs au plus égales à 150 nm.

**4.** Substrat selon l'une des revendications 1 à 3, **caractérisé en ce que** le relief en bosses et creux est formé, en totalité ou en partie, d'un ou plusieurs groupes d'objets sensiblement identiques et présentant au moins deux dimensions appartenant à des classes différentes.

**5.** Substrat selon la revendication 4, **caractérisé en ce que** le relief est formé d'un groupe de bâtonnets d'orientation unique ou multiple.

**6.** Substrat selon l'une des revendications 1 à 3, **caractérisé en ce que** le relief en bosses et creux est formé, en totalité ou en partie, par des premiers objets greffés sur des seconds objets appartenant, pour chaque couple ainsi constitué, à une classe de dimensions supérieures.

**7.** Substrat selon l'une des revendications 1 à 3, **caractérisé en ce que** le relief en bosses et creux est formé, en totalité ou en partie, par des premiers objets agglomérés de manière à former des seconds objets appartenant, pour chaque couple ainsi constitué, à une classe de dimensions supérieures.

**8.** Substrat selon l'une des revendications 1 à 7, **caractérisé en ce que,** même muni de son revêtement éventuel, il est transparent.

**9.** Substrat selon la revendication 8, **caractérisé en ce qu'**il est essentiellement constitué de verre ou de matière plastique.

**10.** Substrat selon l'une des revendications 1 à 9, **caractérisé en ce qu'**il est muni d'un revêtement comportant un agent photocatalytique tel que l'oxyde de titane.

**11.** Substrat selon l'une des revendications 1 à 9, **caractérisé en ce qu'**il est muni d'un revêtement comprenant un agent hydrophobe.

**12.** Substrat selon la revendication 1, **caractérisé en ce que** l'agent hydrophobe est un alkylsilane fluoré de formule générale :

$$CF_3\text{-}(CF_2)_n\text{-}(CH_2)_m\text{-}SiX_3 \qquad (I)$$

dans laquelle :

- n = 0 à 12,
- m = 2 à 5,
- X = est une fonction hydrolysable.

**13.** Application d'un substrat selon t'une des revendications 11 ou 12 à un vitrage anti-pluie.

**14.** Procédé de préparation d'un substrat selon la revendication 1 par attaque mécanique ou chimique, acide ou basique.

**15.** Procédé de formation d'un revêtement sur un substrat selon la revendication 1, avec incorporation d'objets pré-créés présentant des dimensions appartenant à au moins deux classes différentes.

**16.** Procédé selon ta revendication 15 comprenant une étape consistant à déposer des colloïdes dans une matrice sol-gel.

**17.** Procédé de formation d'un revêtement sur un substrat selon la revendication 1, comprenant la création d'objets présentant des dimensions appartenant à au moins deux classes différentes, par association d'objets plus petits et/ou mise en oeuvre d'une technique de formation appropriée, telle que CVD ou pyrolyse.

**Patentansprüche**

**1.** Substrat, wovon wenigstens ein Teil mindestens einer Seite eine Geometrie aufweist, die gegebenenfalls mittels einer Beschichtung erhalten worden ist und sich von derjenigen einer idealen regelmäßigen Bedeckung, die perfekt plan oder auch leicht gebogen ist, unterscheidet, indem sie ein Relief mit Höhen und Tiefen besitzt, die durch Submikrometerabmessungen definiert werden können, die fast in ihrer Gesamtheit zu mindestens zwei unterschiedlichen Klassen gehören, deren jeweilige repräsentative Werte um einen Faktor von mindestens gleich 5 oder höchstens gleich 1/5 variieren, **dadurch gekennzeichnet, dass** es, nachdem es gegebenenfalls mit einer Beschichtung versehen worden ist, mit einer Schicht überzogen wird, die ein hydrophobes Mittel umfasst und insbesondere aus einem monomolekularen Film besteht, durch welchen die Oberflächengeometrie des gegebenenfalls mit einer Beschichtung versehenen Substrats nicht wesentlich verändert wird.

**2.** Substrat nach Anspruch 1, **dadurch gekennzeichnet, dass** zwei Klassen von unterschiedlichen Abmessungen vorhanden sind, deren jeweilige repräsentative Werte um einen Faktor von mindestens 100 oder höchstens 1 /100 variieren.

**3.** Substrat nach Anspruch 1 oder 2, **dadurch gekennzeichnet, dass** für die Submikrometerabmessungen Werte von höchstens 150 nm gewählt werden.

**4.** Substrat nach einem der Ansprüche 1 bis 3, **dadurch gekennzeichnet, dass** das aus Höhen und Tiefen bestehende Relief insgesamt oder teilweise aus einer oder mehreren Gruppen von Objekten gebildet wird, die im Wesentlichen identisch sind und mindestens zwei Abmessungen besitzen, die zu unterschiedlichen Klassen gehören.

**5.** Substrat nach Anspruch 4, **dadurch gekennzeichnet, dass** das Relief von einer Gruppe von Stäbchen mit einer einzigen oder mit mehreren Ausrichtungen gebildet wird.

**6.** Substrat nach einem der Ansprüche 1 bis 3, **dadurch gekennzeichnet, dass** das aus Höhen und Tiefen bestehende Relief insgesamt oder teilweise von ersten Objekten, die auf zweiten Objekten aufgebracht sind, die bei jedem so gebildeten Paar zu einer Klasse mit größeren Abmessungen gehören, gebildet wird.

**7.** Substrat nach einem der Ansprüche 1 bis 3, **dadurch gekennzeichnet, dass** das aus Höhen und Tiefen bestehende Relief insgesamt oder teilweise von ersten Objekten, die derart agglomeriert sind, dass zweite Objekte gebildet werden, die bei jedem so gebildeten Paar zu einer Klasse mit größeren Abmessungen gehören, gebildet wird.

**8.** Substrat nach einem der Ansprüche 1 bis 7, **dadurch gekennzeichnet, dass** es, selbst nachdem es gegebenenfalls mit der Beschichtung versehen worden ist, transparent ist.

**9.** Substrat nach Anspruch 8, **dadurch gekennzeichnet, dass** es im Wesentlichen aus Glas oder Kunststoff besteht.

**10.** Substrat nach einem der Ansprüche 1 bis 9, **da-**

durch gekennzeichnet, dass es mit einer Beschichtung versehen ist, die ein photokatalytisches Mittel wie Titanoxid umfasst.

11. Substrat nach einem der Ansprüche 1 bis 9, **dadurch gekennzeichnet, dass** es mit einer ein hydrophobes Mittel umfassenden Beschichtung versehen ist.

12. Substrat nach Anspruch 1, **dadurch gekennzeichnet, dass** das hydrophobe Mittel ein Fluoralkylsilan mit der allgemeinen Formel

$$CF_3\text{-}(CF_2)_n\text{-}(CH_2)_m\text{-}SiX_3 \qquad (I)$$

ist, in welcher

- $n = 0$ bis 12,
- $m = 2$ bis 5 und
- $X$ = eine hydrolysierbare funktionelle Gruppe bedeutet.

13. Verwendung eines Substrats nach Anspruch 11 oder 12 für eine regenabweisende Verglasung.

14. Verfahren zur Herstellung eines Substrats nach Anspruch 1 durch einen mechanischen Angriff oder ein saures bzw. basisches chemisches Ätzen.

15. Verfahren zur Herstellung einer Beschichtung auf einem Substrat nach Anspruch 1 mit Einbau von zuvor gebildeten Objekten, die Abmessungen besitzen, die zu mindestens zwei unterschiedlichen Klassen gehören.

16. Verfahren nach Anspruch 15, das eine Stufe umfasst, die darin besteht, Kolloide in einer Sol-Gel-Matrix aufzubringen.

17. Verfahren zur Herstellung einer Beschichtung auf einem Substrat nach Anspruch 1, das die Bildung von Objekten, die Abmessungen besitzen, die zu mindestens zwei unterschiedlichen Klassen gehören, durch Verbindung von kleineren Objekten und/ oder durch Anwendung eines geeigneten Bildungsverfahrens wie CVD oder Pyrolyse umfasst.

**Claims**

1. Substrate, where at least part of one of its faces has a geometry, possibly obtained by means of a coating, and which differs from that of an ideal regular layer, which is perfectly flat or even slightly curved, in that it has a relief consisting of protrusions and hollows which can be defined by submicron dimensions which, almost entirely, belong to at least two different classes whose respective representative values vary by a factor of at least 5 and no more than 1/5, **characterised in that**, after it has possibly been provided with a coating, it is covered with a layer comprising a hydrophobic agent, this layer consisting in particular of a monomolecular film not substantially modifying the surface geometry of the substrate possibly provided with its coating.

2. Substrate according to Claim 1, **characterised by** the existence of two classes with different dimensions whose respective representative values vary by a factor of at least 100 and no more than 1/100.

3. Substrate according to Claim 1 or 2, **characterised in that** values of no more than 150 nm are chosen from the said submicron dimensions.

4. Substrate according to one of Claims 1 to 3, **characterised in that** the relief in the form of protrusions and hollows is formed, in whole or in part, from one or more groups of substantially identical objects having at least two dimensions belonging to different classes.

5. Substrate according to Claim 4, **characterised in that** the relief is formed by a group of sticks with a single or multiple orientation.

6. Substrate according to one of Claims 1 to 3, **characterised in that** the relief in the form of protrusions and hollows is formed, in whole or in part, by first objects grafted onto second objects belonging, for each pair thus formed, to a class of greater dimensions.

7. Substrate according to one of Claims 1 to 3, **characterised in that** the relief in the form of protrusions and hollows is formed, in whole or in part, by first objects agglomerated so as to form second objects belonging, for each pair thus formed, to a class of greater dimensions.

8. Substrate according to one of Claims 1 to 7, **characterised in that**, even provided with any coating, it is transparent.

9. Substrate according to Claim 8, **characterised in that** it consists essentially of glass or plastics material.

10. Substrate according to one of Claims 1 to 9, **characterised in that** it is provided with a coating comprising a photocatalytic agent such as titanium dioxide.

11. Substrate according to one of Claims 1 to 9, **char-**

**acterised in that** it is provided with a coating comprising a hydrophobic agent.

12. Substrate according to Claim 11, **characterised in that** the hydrophobic agent is a fluorinated alkylsilane of general formula:

$$CF_3\text{-}(CF_2)_n\text{-}(CH_2)_m\text{-}SiX_3 \qquad (I)$$

in which:

- $n = 0$ to $12$,
- $m = 2$ to $5$,
- X is a hydrolysable function.

13. Application of a substrate according to one of Claims 11 or 12 to a rain-repellent glazing.

14. Method of preparing a substrate according to Claim 1 by mechanical or chemical, acidic or basic, etching.

15. Method of forming a coating on a substrate according to Claim 1, with the incorporation of pre-created objects having dimensions belonging to at least two different classes.

16. Method according to Claim 15, comprising a step consisting of depositing colloids in a sol-gel matrix.

17. Method of forming a coating on a substrate according to Claim 1, comprising the creation of objects having dimensions belonging to at least two different classes, by the association of smaller objects and/or the implementation of a suitable formation technique, such as CVD or pyrolysis.